# EUROPEAN PATENT SPECIFICATION

(11) **EP 2 364 463 B1**
(45) Date of publication and mention of the grant of the patent: **08.01.2014**
(21) Application number: 09796793.9
(22) Date of filing: 13.11.2009
(51) Int. Cl.: G05B 15/02

(54) **ELECTRONIC SYSTEM FOR VIDEO DOOR ENTRY COMMUNICATION AND/OR FOR HOME AUTOMATION WITH OPTIMISED SIZING**
ELEKTRONISCHES SYSTEM FÜR VIDEOTÜREINTRITTSKOMMUNIKATION UND/ODER DOMOTIK MIT OPTIMIERTER GRÖSSE
SYSTÈME ÉLECTRONIQUE POUR COMMUNICATION VIDÉO D ENTRÉE DE PORTE ET/OU POUR AUTOMATISATION DOMESTIQUE AVEC DIMENSIONNEMENT OPTIMISÉ

(30) Priority: 04.12.2008 IT MI20082151
(43) Date of publication of application: 14.09.2011
(73) Proprietor: Bticino S.p.A., 20154 Milano (IT)
(72) Inventor: BELLASIO, Fabio, I-22030 Castelmarte (Como) (IT)
(74) Representative: Cosenza, Simona
(86) International application number: PCT/IB2009/007473
(87) International publication number: WO 2010/064101

(56) References cited:
- US-B2- 6 967 565

## Description

The present invention relates to an electronic system for video door entry communication and/or for home automation, such as for example a door entry communication or video door entry communication system or a home automation system, which allows an optimum sizing of the same.

In particular, the present invention relates to an electronic system for the transmission of digital controls and data and of analogue audio and video signals.

Nowadays, in various types of electronic systems, and in particular in electronic systems for video door entry communication and/or for home automation, it is known to use a set of different cables according to the function to be carried out.

In particular, it is known the use of a digital communication BUS for allowing the exchange of control data and signals between the devices belonging to such systems, of a special cable (for example of the coaxial type) for transmitting the video signal, of cables of suitable sections for managing the remote power supply of the devices, and of cables suitable for transmitting the audio signal.

Electronic systems of this type, carrying out functions of a different type, such as for example control and automation of loads such as lights or motors, monitoring and control of rooms such as anti-intrusion systems, communication by telephony and videotelephony, sound broadcasting, heat regulation and so on, are widespread as they are used both in the household and in the service field.

For example, door entry and/or video door entry systems currently known allow the communication of a certain number of intercom stations, positioned inside household units, with one or more external call stations. Likewise, new-generation home automation systems are capable of communicating with the outside world, so as to interact with the building from land and mobile network telephones and/or from any PC, via local network or via the Internet, in order to setup the house to the desired reception, for example for turning the heating on or starting the washing machine, restoring electrical energy, turning some spot lights on, opening a given number of motor-driven shutters, adjusting the room temperature in the rooms and so on. The need of having an increasing number of ancillary functions to use in such electronic systems and inside each household unit, which add up to the usual telephone functions, besides those of communication between telephone and external video door entry station, actuation of electric locks, stairs lights, or any other electrical and/or electronic actuator, has led to the making of a multiwire communication BUS through which both the exchange of digital controls and data, the remote power supply of the single devices belonging to the system, and the exchange of the analogue audio and video signals required for the video door entry function are carried out.

The installation of such systems using connections of a different type causes increasingly higher costs as it requires the use of both specialised personnel for making the required connections, and long installation times usually due to the finding or the make of proprietary cables especially designed for the single system.

In fact, special cables are recommended by the system manufacturers, especially designed for allowing the system operation and comprising cables of different construction technologies and sections.

By way of an example, the set of recommended cables may comprise a coaxial cable for transmitting video signals, cables of suitable section for managing the remote power supply of the devices, cables for transmitting control signals and audio signals.

In the absence of the appropriate cable, an installer usually proceeds by adapting cables he has, to create *ad hoc* cables so as not to delay the laying of the electronic system for video door entry communication and/or for home automation for when cables especially designed for the same will be available to him.

In addition, this leads to the need of sizing such systems so that they may operate in a reliable manner also when they are not installed by the especially designed cables, but only with substantially any type of cable.

Such sizing involves giving up a part of the performances the system would be capable of offering, for example limiting the maximum number of devices connectable to the system compared to the maximum theoretical number of devices manageable by the same. Likewise, there is also a reduction of the maximum admissible distance of connection between the devices and the multiwire communication BUS compared to the theoretically achievable limit, in order to ensure the quality of the signal transmitted, and in particular of the video signal.

The object of the present invention is to obviate the drawbacks mentioned above and in particular to devise an electronic system for video door entry communication and/or for home automation which may be sized so as to use the system resources in an optimum manner.

A further object of the present invention is to provide an electronic system for video door entry communication and/or for home automation which should allow connecting an optimised number of devices at long distances using the features of the multiwire communication BUS.

Another object of the present invention is to provide an electronic system for video door entry communication and/or for home automation which should ensure a quick and simplified installation of the same.

Last but not least, another object of the present invention is to devise an electronic system for video door entry communication and/or for home automation which should be highly reliable and installable at relatively low costs, compared to known techniques, the functions that may be carried out being the same.

These and other objects according to the present invention are achieved by providing an electronic system for video door entry communication and/or for home automation as illustrated in claim 1.

Further features of the electronic system for video door entry communication and/or for home automation are defined in the dependent claims.

The features and the advantages of an electronic system for video door entry communication and/or for home automation according to the present invention will appear more clearly from the following description, made by way of an indicative non-limiting example with reference to the annexed schematic drawings, wherein:
- figure 1 is a schematic view of a first embodiment of the electronic system for video door entry communication and/or for home automation according to the present invention;
- figure 2 is a schematic view of a second embodiment of the electronic system for video door entry communication and/or for home automation according to the present invention;
- figure 3 is a schematic view of the connection of the embodiments of figure 1 and 2 to an Ethernet network;
- figure 4 is a schematic block view of the power supply means of the electronic system for video door entry communication and/or for home automation according to the present invention;
- figure 5 is a schematic block view of the signal processing and data exchange means of an internal station of the electronic system for video door entry communication and/or for home automation according to the present invention;
- figure 6 is a schematic block view of the signal processing and data exchange means of an external station of the electronic system for video door entry communication and/or for home automation according to the present invention.

With reference to the figures, there is shown an electronic system for video door entry communication and/or for home automation, globally indicated with reference numeral 10, 10'.

The electronic system for video door entry communication and/or for home automation comprises a plurality of electronic devices 11-16, 11'-16' connected to a multiwire communication BUS 19.

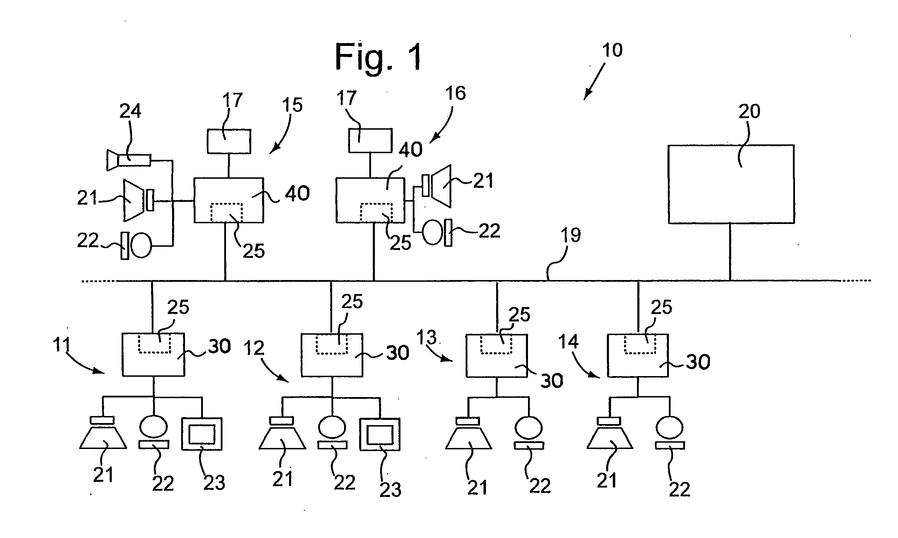

In the case of an electronic system for door entry communication 10, either of the video type or not, shown in figure 1, devices 11-14,15-16 connected to the electronic system 10 are both internal stations 11-14, and external stations 15-16.

By internal station 11-14 it is meant a user appliance, such as for example a door entry system or a video door entry system, installable in household units, which exchanges an audio signal with an external station 15-16 and receives a video signal from the same 15-16.

The internal stations 11-14 therefore comprise an audio interface consisting of at least one microphone 22 and a loudspeaker 21, and in the case of video door entry system, also an interface 23 for displaying video signals, such as a screen, an LCD or an OLED, for displaying images detected by the external stations 15-16 or a warning signal.

Such interfaces 21-23 are managed by first signal processing means 30 that further manage the exchange of data, control signals as well as analogue audio and/or video signals between the internal stations 11-14 and the rest of the system 10.

Likewise, by external stations 15-16 it is meant generic user appliances applied to one of the external walls of a building or an apartment, which exchange an audio signal with the internal stations 11-14 and transmit a video signal to the same 11-14. The external stations 15-16 therefore comprise an audio interface consisting of at least one microphone 22 and a loudspeaker 21, and in the case of video door entry system, also an interface for acquiring video signals, such as a telecamera 24.

Interfaces 21, 22 and 24 of the external stations 15/16 are managed by second signal processing means 40 that further manage the exchange of data, control signal as well as analogue audio and/or video signals between the external stations 15-16 and the rest of system 10.

It is clear that the number of internal 10-14 and external 15-16 devices may be different from system 10 shown by way of an example, and in particular considerably higher.

Each external station 15-16 may further be connected to respective electric locks 17, suitable for opening respective main entrances.

Both the internal stations 11-14, and the external stations 15-16 are connected, all in parallel to one another, to the multiwire communication BUS 19, through which they are supplied through power supply means 20 connected to BUS 19, and exchange data, digital control signals and analogue audio and video signals.

To this end, the multiwire communication BUS 19 is such as to allow both the remote power supply and the transmission of signals relating to data and information required for carrying out the door entry or video door entry system functions, such as turning the stairs lights on, actuating the electric lock, calling the apartments obtained by assigning a number code to each user name, as well as the ancillary functions, such as transmitting analogue audio and/or video signals between intercommunicating internal stations 11-14, the optional use of the internal stations 11-14 as a telephone, the actuation of alarm devices and the integration of any other electronic automatism.

The deployment of the digital bus 19 in the entire installation may envisage the use of a variable number of accessories (not shown) that allow BUS 19 itself to reach the electronic devices 11-16 adapting to the topology of system 10, 10'.

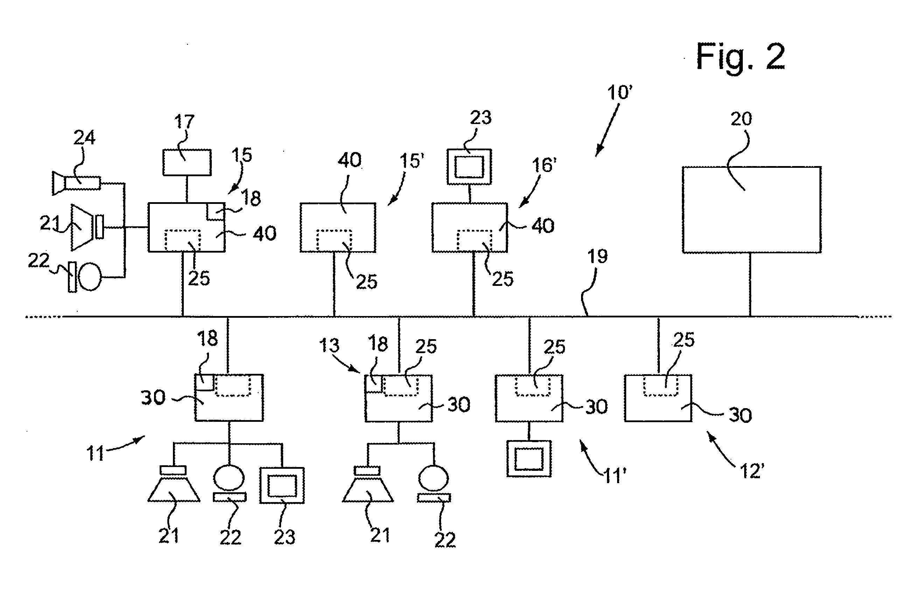

In the case of an electronic system for home automation 10', shown in figure 2, the electronic devices 11, 13, 15, 11', 12', 15', 16' connected to the electronic system 10' comprise both internal 11, 13 and external stations 15, 16, and a plurality of control interfaces 11', 12', 15', 16'. Such internal 11, 13 and external stations 15, 16, as well as the control interfaces 11', 12', 15', 16' are capable of both driving and displaying the status of an electric or electronic actuator (not shown) connected to the same, for example, for monitoring and/or actuating the heating or starting the washing machine, checking the status and optionally restoring electrical energy, turning some spot lights on, opening a given number of motor-driven shutters, adjusting the room temperature in the rooms and so on.

In addition, the internal 11, 13 and external stations 15, 16 may be provided with special connectors 18 suitable for connecting sensors or actuators (not shown) for home automation functions, such as for example gas sensors for detecting abnormal situations, smoke sensors for fire prevention alarm, magnetic contact sensors and/or movement sensors suitable for detecting the opening of doors and windows or the presence of ill intentioned people in the apartment.

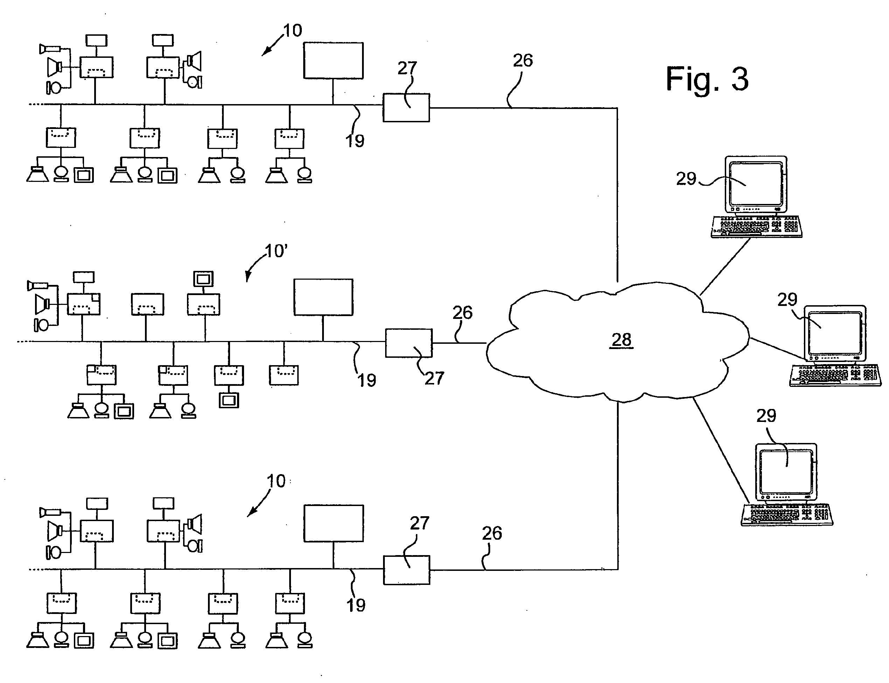

A preferential embodiment further envisages that the signals detected in the case of abnormal situations are transmitted through BUS 19 to a guarded place in a remote position or not, for example through a local or global Ethernet network 28, as shown in figure 3.

Also in this case, the electronic devices 11, 13, 15, 11', 12', 15', 16' are connected, all in parallel to one another, to the multiwire communication BUS 19, through which they are supplied through power supply means 20 and exchange data, signals and controls.

The electronic devices 11, 13, 15, 11', 12', 15', 16' are partially provided with an interface, such as for example a screen 23, for displaying a video signal transmitted through BUS 19, or with audio interfaces 21, 22 or with an image acquisition interface 24.

Also in this case, such interfaces 21-24 and the control interfaces 11', 12', 15', 16' are managed by signal processing and data exchange means 30, 40 that further manage the exchange of data, control signals as well as analogue audio and/or video signals between the electronic devices 11, 13, 15, 11', 12', 15', 16' and the rest of system 10', in particular between the electronic devices 11, 13, 15, 11', 12', 15', 16' and BUS 19.

According to the present invention, the multiwire communication BUS 19 is made with cable with eight conductors, twisted in pairs, so called twisted pairs, either of the screened type or not.

Twisted conductors usually provide good insulation from external electromagnetic noise and prevent electromagnetic interference or *crosstalk* between adjacent conductors.

Cables with four pairs of twisted conductors of category 5, also called CAT5, defined through the US standard EIA/TIA-568 or the European one EN50173, are preferably used, terminated by electrical connectors of the type RJ-45 or 8P8C, that is, made according to standard EN60603-7.

Likewise, cables of a similar type are used, such as for example of category 5E (CAT5E), category 6 (CAT6) or category 6E (CAT6E) and so on.

On the one hand, such cables are particularly widespread among the installers, and therefore very easy to find at electrical material dealers, and on the other hand they are difficult to replace with cables adapted *ad hoc* since the connection of the single conductors to a connector RJ-45 cannot be carried out manually, the connectors to this purpose having to be connected to the terminations of such connector by a special tool called cable crimper capable of mechanically squeezing the conductors until they remain blocked on the connector.

Moreover, cables CAT5 or the like have well defined features, such as for example impedance, that allow an optimisation in sizing system 10, 10' in particular in defining the number of devices that may be managed by the multiwire communication BUS 19 and the maximum distance of fastening of the same.

In fact, thanks to the higher electromagnetic immunity provided by the pairs of twisted conductors and to the fact that the audio and video signals are transmitted in differential mode, it is possible to maintain the signal quality required even on greater distances than those currently achievable in systems using another type of multiwire cables.

The Applicant has encountered considerable technical difficulties for carrying out the replacement of the cables currently used with the cables with four pairs of twisted conductors.

In particular, the replacement of the cables currently used with cables CAT5 or the like has required particular technical modifications to the power supply means 20 used in the electronic system 10, 10' for video door entry communication and/or for home automation as well as to the signal processing and data exchange means 30, 40 of the electronic devices 11-16, 11'-16' themselves.

In fact, since cables CAT5 or the like have conductors with a fixed and particularly small section, they exhibit a higher ohmic drop than the cables used to date that could be designed choosing the most suitable section.

It is therefore necessary to supply at particularly high voltages - for this type of applications, but below 48V, so that the electronic devices 11-16, 11'-16' located far away are reached by a sufficient power supply voltage, despite the voltage drop along the conductors.

In order to solve the problems caused by the high ohmic drop along the conductors of cable CAT5 and therefore position the electronic devices 10-16, 10'-16' connected to BUS 19 at great distances, it is necessary to reduce the current absorbed by such devices 11-16, 11'-16' as much as possible.

To this end, the first 30 and the second 40 signal processing and data exchange means of the electronic devices 11-16, 11'-16' are provided with an internal power supply 25 of the *switching step down* type.

In this way it is possible to manage the problems related to a high ohmic drop in a distributed manner on all devices 11-16, 11'-16' connected to BUS 19 that use a considerable electrical power.

Such *switching step down* power supplies 25 internal to devices 11-16, 11'-16' connected in output 46 to BUS 19 allow reducing the current absorbed by devices 11-16, 11'-16' themselves as much as possible.

In fact, the *switching step down* power supply 25 has the feature of keeping the power between input and output constant.

Therefore, if we suppose that the voltage/current product in output from the *switching step down* power supply 25 is constant, that is, the product between the voltage and the current used of the electronic circuitry inside devices 11-16, 11'-16', increasing the voltage on BUS 19 supplied by the power supply means 20 it is thus possible to absorb lower currents.

The technical modifications to the signal processing and data exchange means 30, 40 of the electronic devices 11-16, 11'-16' have allowed using the particular feature of good insulation from the external electromagnetic noises provided by the cables comprising conductors twisted in pairs also for the particular application of transmission of audio/video signals and controls in an electronic system for video door entry communication and/or home automation.

In fact, such electromagnetic immunity is ensured in the case of transmission of differential signals and controls on a twisted pair.

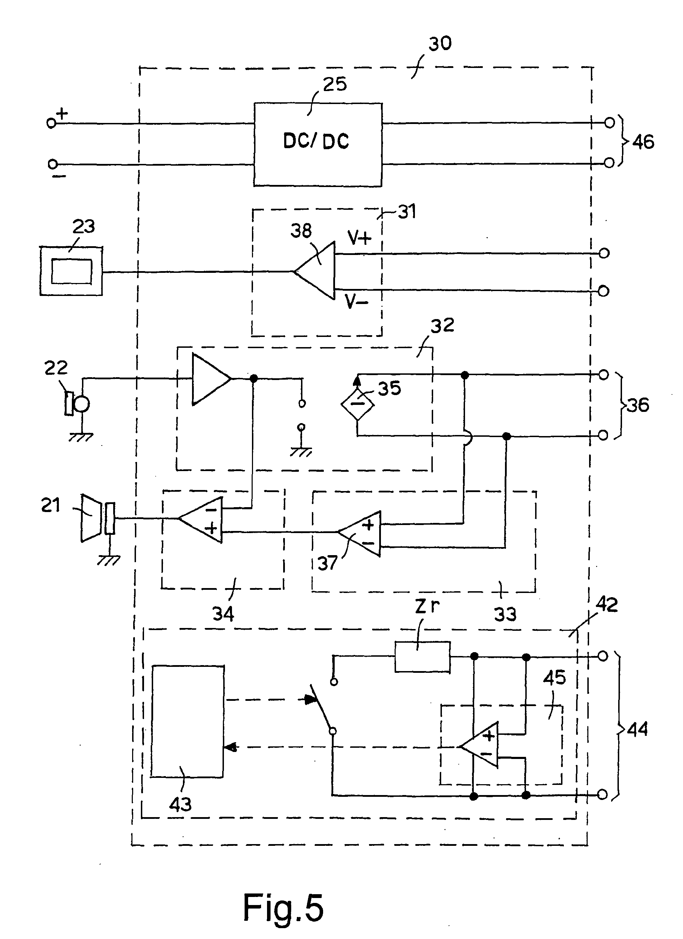

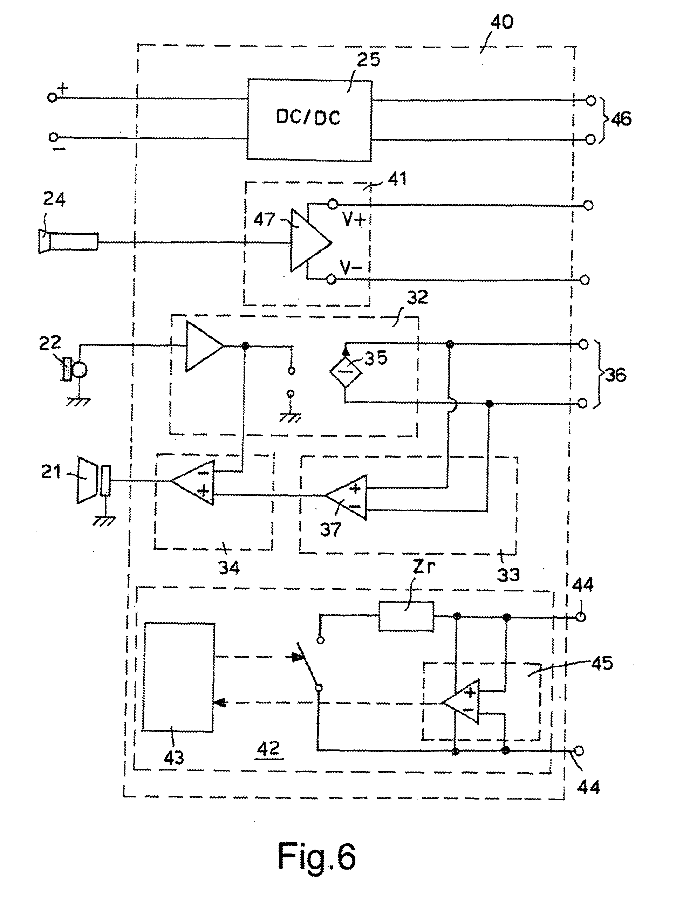

Figures 5 and 6 respectively show a preferential embodiment of the first 30 and second 40 signal processing and data exchange means.

According to the present invention, such first 30 and second 40 signal processing and data exchange means comprise a plurality of stages 31, 32, 33, 41 suitable for processing (generating and/or reading) differential signals.

By way of an example, the second signal processing and data exchange means 40 comprise a stage 41 for transmitting the video signal consisting of a differential amplifier 47 designed for driving a known impedance of the multiwire BUS 19 and suitable for generating a differential analogue video signal based on the analogue video signal received in input from the telecamera 24.

Correspondingly, the first signal processing and data exchange means 30 comprise a stage 31 for receiving the video signal consisting of a differential amplifier 38 which, through the multiwire BUS 19, receives in input the differential signal generated by the transmission stage of the video signal 41 and is connected in output to interface 23 for displaying video signals.

Likewise, for the exchange of differential audio signals, the first 30 and the second 40 signal processing and data exchange means are provided with a stage for transmitting the analogue audio signal 32 comprising a voltage controlled current generator 35, coupled to microphone 22, which thanks to a suitable downstream connection described hereinafter, is capable of providing a differential analogue signal in output 36.

Correspondingly, there is provided a stage for receiving the audio signal 33 consisting of a differential amplifier 37 that picks up the signal from the two input/output connecting terminal 36 of the audio signal and transfers it to loudspeaker 21 preferably with the interposition of a stage 34 for clearing the audio hybrid between loudspeaker 21 and microphone 22 .

For the transmission of digital control signals, the first 30 and the second 40 signal processing and data exchange means further comprise a control stage 42 provided with a microcontroller 43 and with a comparator circuit 45, for example of the type described in patent EP0574080 of the same Applicant, which allows interfacing to microcontroller 43 through two wires 44 only.

In input to the control stage 42 there is further provided an impedance Zr for making a voltage divider of the input voltage 44 supplied by the supply means 20.

In fact, the data and signal exchange is allowed by the design of an impedance Zd, Za of the power supply means 20 which with the type of cable used, allows the communication with a large number of connected devices 11-16.

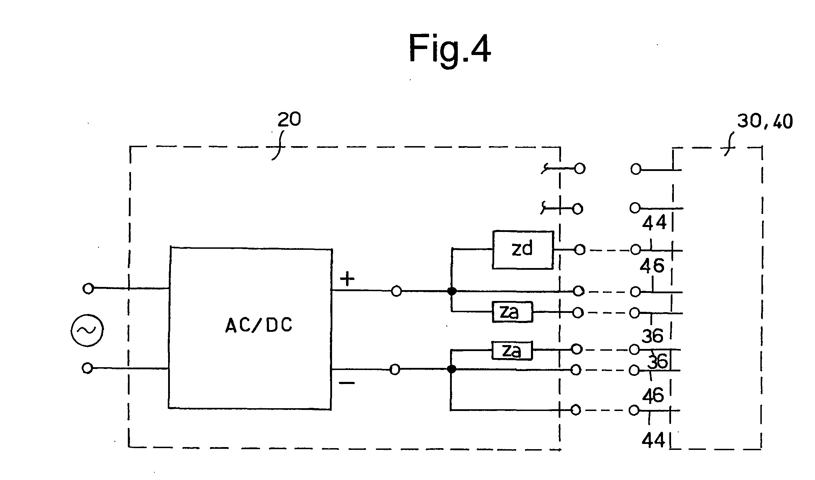

A preferential embodiment of the power supply means 20 is shown in figure 4.

On the output of the power supply means placed at the wires of BUS 19 intended for transmitting and receiving the digital controls and data, that is, those of connection to input 44 of the control stages 42 of the first 30 and second 40 signal processing and data exchange means there is provided a first impedance Zd preferably consisting of a resistor placed in parallel to an inductance, which allows forming, distributing it on the ohmic resistor of the cable and on impedance Zr placed in input to the internal 11-14 and external devices 15-16, of a digital signal intelligible by the comparator circuit 45 of the internal 11-14 and external devices 15-16 remotely connected as well as concurrently supplying a large number of control stages 42 (for example 400).

The transmission of the digital signals in this way is particularly free from electromagnetic noise since it occurs through the same conductors 44 through which power is supplied.

On the power supply output located at the wires of BUS 19 intended for transmitting and receiving the analogue audio signal, therefore those of connection to the output/input 36 of the stages for receiving and transmitting the audio signal 33, 32 of the first 30 and second 40 signal processing and data exchange means, there are provided two second impedances Za of equal value, preferably consisting of resistors, located one towards the positive pole and the other towards the negative pole, such as to allow the audio transmitting stages 32 to behave as current generators controlled by microphone 22 and to have at the output a purely differential signal receivable from the corresponding differential audio receiving stages 33 of the receiving device 11-16.

The power supply means 20 therefore, through a suitable design of the second output impedances Za, also allow suitably supplying the audio circuits of the internal 11-14 and external 15-16 electronic devices.

Finally, the power supply means 20 are directly connected, through the multiwire BUS 19, to output 46 of the power supply 25 inside the signal processing and data exchange means 30, 40 of the electronic devices 11-16, 11'-16'.

In the electronic systems for video door entry communication 10 and/or for home automation 10' according to the present invention, it is even easier to connect the relevant system BUS 19 to a network interface or *gateway* 27 towards a local network 28 or LAN (*Local Area Network)* based on the Ethernet standard and on the communication protocol TCP/IP and consequently easily connectable to a global network or WAN *(Wide Area Network)* such as for example the Internet.

In fact, such network interface 27 is generally already provided with special ports for connectors RJ-45 which envisage the use of cables CAT 5 as this is the standard used for wiring 26 Ethernet networks 28.

It is therefore easy for the installer to wire the multiwire BUS 19 since the wiring rules and the tools to perform them, such as for example the cable crimper, are the same used for wiring 26 of the Ethernet network 28.

In this way it is therefore possible to easily perform the exchange of data, signals and controls among a plurality of *computers* 29 connected to network 28 and the video door entry 10 and/or home automation 10' systems, as shown in figure 3.

Such connection is advantageous for example for the remote control of some functions of the video door entry 10 and/or home automation 10' systems.

The features of the electronic system object of the invention as well as the relevant advantages are clear from the above description.

The use of cables with four pairs of twisted conductors allows reaching great distances with the signal, in particular with the video signal, optimising the transmission on the basis of the cable features. Moreover, it is possible to achieve a high immunity of the signal transmission to the environmental electromagnetic noise, in particular adopting methods of transmission of the various signals that use the features of the cable used, such as for example the differential transmission of the various signals and in particular of the video signal.

In addition, the use of the particular cable allows managing the remote supply of the devices in an optimised and distributed manner.

Last but not least, the use of a widespread type of cables with four pairs of twisted conductors, such as category 5 or the like, greatly simplifies the installer's task and the installation time. Moreover, since such cables have very thin conductors, they also introduce a saving on raw material.

## Claims

1. Electronic system (10;10') for video door entry communication and/or for home automation comprising a plurality of electronic devices (11-16;11'-16') connected in parallel to a multiwire communication BUS (19), said multiwire communication BUS (19) further being connected to power supply means (20) for the remote power supply of said electronic devices (11-16;11'-16'), said multiwire communication BUS (19) being made by means of a cable with eight conductors twisted in pairs **characterised in that** said plurality of electronic devices (11-16;11'-16') exchange digital data, digital control signals, analogue audio signals and analogue video signals over said multiwire communication BUS (19), said analogue signals each being transmitted in differential mode on a twisted pair.

2. Electronic system (10;10') for video door entry communication and/or for home automation according to claim 1 **characterised in that** said electronic devices (11-16;11'-16') comprise means (30,40) for signal processing and data exchange for said exchange of data, control signals, audio signals and video signals with said multiwire communication BUS (19), said means (30,40) for signal processing and data exchange comprising a plurality of stages (31,32,33,41) suitable for processing differential signals, said differential signals being transmitted by said pairs of twisted conductors.

3. Electronic system (10;10') for video door entry communication and/or for home automation according to claim 1 or 2 **characterised in that** said cable with eight conductors twisted in pairs is of the type included in the group consisting of the types:
- CAT5;
- CAT5E;
- CAT6;
- CAT6E.

4. Electronic system (10;10') for video door entry communication and/or for home automation according to claim 1, 2 or 3 **characterised in that** said cable with eight conductors twisted in pairs is ended with an electric connector of the RJ-45 type.

5. Electronic system (10;10') for video door entry communication and/or for home automation according to any one of the preceding claims **characterised in that** said electronic devices (11-16;11'-16') are provided with an internal power supply (25) of the "switching step down" type.

6. Electronic system (10) for video door entry communication and/or for home automation according to any one of the preceding claims **characterised in that** said electronic devices (11-16; 11'-16') are internal stations (11-14) and external stations (15-16), said internal stations (11-14) and said external stations (15-16) comprising an audio interface made up of at least one microphone (22) and one loudspeaker (21).

7. Electronic system (10) for video door entry communication and/or for home automation according to claim 6 **characterised in that** said internal stations (11-14) comprise an interface for displaying video signals (23) and said external stations (15-16) comprise an interface for acquiring video signals (24).

8. Electronic system (10;10') for video door entry communication and/or for home automation according to claim 6 or 7 **characterised in that** said external stations (15-16) are each connected to an electric lock (17).

9. Electronic system (10') for video door entry communication and/or for home automation according to any one of the preceding claims **characterised in that** said electronic devices (11-16;11'-16') comprise a plurality of control interfaces capable of commanding an electric or electronic actuator connected to the same.

10. Electronic system (10) for video door entry communication and/or for home automation according to any one of claims 6 to 9 **characterised in that** said internal stations (11-14) and/or said external stations (15-16) comprise at least one connector (18) adapted to connect at least one sensor or one actuator for home automation functions.

11. Electronic system (10) for video door entry communication and/or for home automation according to any one of claims 2 to 10 **characterised in that** said plurality of stages (31,32,33,41) suitable for processing differential signals comprises at least one stage of transmission of a differential video signal (41) or a stage of reception of a differential video signal (31).

12. Electronic system (10) for video door entry communication and/or for home automation according to any one of claims 6 to 11 **characterised in that** said plurality of stages (31,32,33,41) suitable for processing differential signals comprises at least one stage for transmitting a differential audio signal (32) and a stage for receiving a differential audio signal (33), said stage of transmission of a differential audio signal (32) comprising a voltage driven current generator (35) driven by the voltage in output to said microphone (22).

13. Electronic system (10) for video door entry communication and/or for home automation according to any one of the preceding claims, **characterised in that** said stages for transmitting (32) and receiving (33) a differential audio signal are connected by said multiwire communication BUS (19) to said power supply means (20), and **in that** in output to said power supply means (20), at the conductors (36) of said multiwire communication BUS (19) intended for transmitting and receiving the differential analogue audio signal, there are provided two impedances (Za) having the same value, located one towards the positive pole and the other towards the negative pole.

14. Electronic system (10) for video door entry communication and/or for home automation according to any one of claims 2 to 13 **characterised in that** said means (30,40) for signal processing and data exchange comprise a control stage (42) comprising a microcontroller (43) interfaced to said multiwire BUS (19) by a comparator circuit (45).

15. Electronic system (10) for video door entry communication and/or for home automation according to claim 14 **characterised in that** said control stage (42) comprises an impedance (Zr) in input, said control stage (42) being connected by said multiwire communication BUS (19) to said power supply means (20), and **in that** in output to said power supply means (20), at the conductors (44) of said multiwire communication BUS (19) intended for transmitting and receiving said digital control signals and digital data, there is connected an impedance (Zd).

16. Electronic system (10) for video door entry communication and/or for home automation according to any one of the preceding claims **characterised in that** in output to said power supply means (20) - at the conductors of said multiwire communication BUS (19) intended for transmitting and receiving said digital control signals and digital data - a resistor is connected in parallel to an inductance.

17. Electronic system (10) for video door entry communication and/or for home automation according to any one of the preceding claims **characterised in that** in output to said power supply means (20) - at the conductors of said multiwire communication BUS (19) intended for transmitting and receiving the analogue audio signal - two resistors of the same value are provided for, arranged one towards the positive pole and the other towards the negative pole.

## Patentansprüche

1. Elektronisches System (10; 10') für die Videotürsprechanlagenkommunikation und/oder für die Hausautomation, das eine Vielzahl von elektronischen Geräten (11-16; 11'-16') umfasst, die in Parallelschaltung mit einem Mehrdraht-Kommunikationsbus (19) verbunden sind, wobei dieser Mehrdraht-Kommunikationsbus (19) ferner mit einer Stromversorgungseinrichtung (20) für die Fernstromversorgung dieser elektronischen Geräte (11-16; 11'-16') verbunden ist, wobei dieser Mehrdraht-Kommunikationsbus (19) mittels eines Kabels mit acht paarweise verdrillten Adern hergestellt ist, **dadurch gekennzeichnet, dass** die vielen elektronischen Geräte (11-16; 11'-16') über diesen Mehrdraht-Kommunikationsbus (19) digitale Daten, digitale Steuersignale, analoge Audiosignale und analoge Videosignale austauschen, wobei diese analogen Signale jeweils im Differentialmodus auf einem verdrillten Adernpaar übertragen werden.

2. Elektronisches System (10; 10') für die Videotürsprechanlagenkommunikation und/oder für die Hausautomation nach Anspruch 1, **dadurch gekennzeichnet, dass** die elektronischen Geräte (11-16; 11'-16') Mittel (30, 40) für die Signalverarbeitung und den Datenaustausch für den Austausch von Daten, Steuersignalen, Audiosignalen und Videosignalen mit dem Mehrdraht-Kommunikationsbus (19) umfassen, wobei diese Mittel (30, 40) für die Signalverarbeitung und den Datenaustausch eine Vielzahl von Stufen (31, 32, 33, 41) umfassen, die sich zum Verarbeiten von differenziellen Signalen eignen, wobei diese differenziellen Signale von den genannten Paaren verdrillter Adern übertragen werden.

3. Elektronisches System (10; 10') für die Videotürsprechanlagenkommunikation und/oder für die Hausautomation nach Anspruch 1 oder 2, **dadurch gekennzeichnet, dass** das Kabel mit acht paarweise verdrillten Adern des Typs ist, der in der Gruppe enthalten ist, die aus den folgenden Typen besteht:
- CAT-5;
- CAT-5E;
- CAT-6;
- CAT-6E.

4. Elektronisches System (10; 10') für die Videotürsprechanlagenkommunikation und/oder für die Hausautomation nach Anspruch 1, 2 oder 3, **dadurch gekennzeichnet, dass** das Kabel mit acht paarweise verdrillten Adern mit einem elektrischen Steckverbinder vom Typ RJ-45 endet.

5. Elektronisches System (10; 10') für die Videotürsprechanlagenkommunikation und/oder für die Hausautomation nach einem der vorhergehenden Ansprüche, **dadurch gekennzeichnet, dass** die elektronischen Geräte (11-16; 11'-16') mit einer internen Stromversorgung (25) vom Typ Abwärts-Schaltregler versehen sind.

6. Elektronisches System (10) für die Videotürsprechanlagenkommunikation und/oder für die Hausautomation nach einem der vorhergehenden Ansprüche, **dadurch gekennzeichnet, dass** die elektronischen Geräte (11-16; 11'-16') interne Stationen (11-14) und externe Stationen (15-16) sind, wobei die internen Stationen (11-14) und die externen Stationen (15-16) eine Audioschnittstelle umfassen, die aus mindestens einem Mikrofon (22) und einem Lautsprecher (21) besteht.

7. Elektronisches System (10) für die Videotürsprechanlagenkommunikation und/oder für die Hausautomation nach Anspruch 6, **dadurch gekennzeichnet, dass** die internen Stationen (11-14) eine Schnittstelle zum Anzeigen von Videosignalen (23) umfassen, und dass die externen Stationen (15-16) eine Schnittstelle zum Erfassen von Videosignalen (24) umfassen.

8. Elektronisches System (10; 10') für die Videotürsprechanlagenkommunikation und/oder für die Hausautomation nach Anspruch 6 oder 7, **dadurch gekennzeichnet, dass** die externen Stationen (15-16) jeweils mit einem elektrischen Schloss (17) verbunden sind.

9. Elektronisches System (10') für die Videotürsprechanlagenkommunikation und/oder für die Hausautomation nach einem der vorhergehenden Ansprüche, **dadurch gekennzeichnet, dass** die elektronischen Geräte (11-16; 11'-16') eine Vielzahl von Steuerschnittstellen umfassen, die in der Lage sind, einen an dieselben angeschlossenen elektrischen oder elektronischen Stellantrieb zu steuern.

10. Elektronisches System (10) für die Videotürsprechanlagenkommunikation und/oder für die Hausautomation nach einem der Ansprüche 6 bis 9, **dadurch gekennzeichnet, dass** die internen Stationen (11-14) und/oder die externen Stationen (15-16) mindestens einen Steckverbinder (18) umfassen, der zum Anschließen von mindestens einem Sensor oder einem Stellantrieb für Hausautomationsfunktionen geeignet ist.

11. Elektronisches System (10) für die Videotürsprechanlagenkommunikation und/oder für die Hausautomation nach einem der Ansprüche 2 bis 10, **dadurch gekennzeichnet, dass** die Vielzahl von Stufen (31, 32, 33, 41), die zum Verarbeiten von differenziellen Signalen geeignet sind, mindestens eine Stufe für die Übertragung eines differenziellen Videosignals (41) oder eine Stufe für den Empfang eines differenziellen Videosignals (31) umfasst.

12. Elektronisches System (10) für die Videotürsprechanlagenkommunikation und/oder für die Hausautomation nach einem der Ansprüche 6 bis 11, **dadurch gekennzeichnet, dass** die Vielzahl von Stufen (31, 32, 33, 41), die zum Verarbeiten von differenziellen Signalen geeignet sind, mindestens eine Stufe zum Übertragen eines differenziellen Audiosignals (32) und eine Stufe zum Empfangen eines differenziellen Audiosignals (33) umfasst, wobei die Stufe für die Übertragung eines differenziellen Audiosignals (32) einen spannungsgesteuerten Stromgenerator (35) umfasst, der von der Spannung am Ausgang des Mikrofons (22) gesteuert wird.

13. Elektronisches System (10) für die Videotürsprechanlagenkommunikation und/oder für die Hausautomation nach einem der vorhergehenden Ansprüche, **dadurch gekennzeichnet, dass** die Stufen zum Übertragen (32) und Empfangen (33) eines differenziellen Audiosignals durch den Mehrdraht-Kommunikationsbus (19) mit der Stromversorgungseinrichtung (20) verbunden sind, und dadurch, dass am Ausgang der Stromversorgungseinrichtung (20) an den Adern (36) des Mehrdraht-Kommunikationsbusses (19), die zum Übertragen und Empfangen des differenziellen analogen Audiosignals vorgesehen sind, zwei Impedanzen (Za) mit dem gleichen Wert vorgesehen sind, von denen eine gegen den Pluspol und die andere gegen den Minuspol angeordnet ist.

14. Elektronisches System (10) für die Videotürsprechanlagenkommunikation und/oder für die Hausautomation nach einem der Ansprüche 2 bis 13, **dadurch gekennzeichnet, dass** die Mittel (30, 40) für die Signalverarbeitung und den Datenaustausch eine Steuerstufe (42) umfassen, die einen Mikrocontroller (43) umfasst, der mit Hilfe einer Vergleichsschaltung (45) an den Mehrdraht-Bus (19) angebunden ist.

15. Elektronisches System (10) für die Videotürsprechanlagenkommunikation und/oder für die Hausautomation nach Anspruch 14, **dadurch gekennzeichnet, dass** die Steuerstufe (42) eine Impedanz (Zr) am Eingang umfasst, wobei diese Steuerstufe (42) durch den Mehrdraht-Kommunikationsbus (19) mit der Stromversorgungseinrichtung (20) verbunden ist, und dadurch, dass am Ausgang der Stromversorgungseinrichtung (20) an den Adern (44) des Mehrdraht-Kommunikationsbusses (19), die zum Übertragen und Empfangen der digitalen Steuersignale und digitalen Daten vorgesehen sind, eine Impedanz (Zd) angeschlossen ist.

16. Elektronisches System (10) für die Videotürsprechanlagenkommunikation und/oder für die Hausautomation nach einem der vorhergehenden Ansprüche, **dadurch gekennzeichnet, dass** am Ausgang der Stromversorgungseinrichtung (20) - an den Adern des Mehrdraht-Kommunikationsbusses (19), die zum Übertragen und Empfangen der digitalen Steuersignale und digitalen Daten vorgesehen sind - ein Widerstand in Parallelschaltung mit einer Induktivität angeschlossen ist.

17. Elektronisches System (10) für die Videotürsprechanlagenkommunikation und/oder für die Hausautomation nach einem der vorhergehenden Ansprüche, **dadurch gekennzeichnet, dass** am Ausgang der Stromversorgungseinrichtung (20) - an den Adern des Mehrdraht-Kommunikationsbusses (19), die zum Übertragen und Empfangen des analogen Audiosignals vorgesehen sind - zwei Widerstände desselben Werts vorgesehen sind, von denen einer gegen den Pluspol und der andere gegen den Minuspol angeordnet ist.

## Revendications

1. Système électronique (10 ; 10') pour communication de portier vidéo et/ou pour domotique comprenant une pluralité de dispositifs électroniques (11-16 ; 11'-16') connectés en parallèle à un bus de communication multifilaire (19), ledit bus de communication multifilaire (19) étant connecté en outre à des moyens d'alimentation électrique (20) pour l'alimentation électrique à distance desdits dispositifs électroniques (11-16 ; 11'-16'), ledit bus de communication multifilaire (19) étant réalisé au moyen d'un câble avec huit conducteurs torsadés en paires, **caractérisé en ce que** ladite pluralité de dispositifs électroniques (11-16 ; 11'-16') échange des données numériques, des signaux de commande numériques, des signaux audio analogiques et des signaux vidéo analogiques sur ledit bus de communication multifilaire (19), lesdits signaux analogiques étant chacun transmis en mode différentiel sur une paire torsadée.

2. Système électronique (10 ; 10') pour communication de portier vidéo et/ou pour domotique selon la revendication 1, **caractérisé en ce que** lesdits dispositifs électroniques (11-16 ; 11'-16') comprennent des moyens (30, 40) pour le traitement de signaux et l'échange de données pour ledit échange de données, signaux de commande, signaux audio et signaux vidéo sur ledit bus de communication multifilaire (19), lesdits moyens (30, 40) pour le traitement de signaux et l'échange de données comprenant une pluralité d'étages (31, 32, 33, 41) adaptés pour traiter des signaux différentiels, lesdits signaux différentiels étant transmis par lesdites paires de conducteurs torsadés.

3. Système électronique (10 ; 10') pour communication de portier vidéo et/ou pour domotique selon la revendication 1 ou 2, **caractérisé en ce que** ledit câble avec huit conducteurs torsadés en paires est du type compris dans le groupe composé des types :
- CAT5 ;
- CAT5E ;
- CAT6 ;
- CAT6E.

4. Système électronique (10 ; 10') pour communication de portier vidéo et/ou pour domotique selon la revendication 1, 2 ou 3, **caractérisé en ce que** ledit câble avec huit conducteurs torsadés en paires est terminé avec un connecteur électrique du type RJ-45.

5. Système électronique (10 ; 10') pour communication de portier vidéo et/ou pour domotique selon l'une quelconque des revendications précédentes, **caractérisé en ce que** lesdits dispositifs électroniques (11-16 ; 11'-16') sont pourvus d'une alimentation électrique interne (25) du type « abaisseur à découpage ».

6. Système électronique (10) pour communication de portier vidéo et/ou pour domotique selon l'une quelconque des revendications précédentes, **caractérisé en ce que** lesdits dispositifs électroniques (11-16 ; 11'-16') sont des stations internes (11-14) et des stations externes (15-16), lesdites stations internes (11-14) et lesdites stations externes (15-16) comprenant une interface audio constituée par au moins un microphone (22) et un haut-parleur (21).

7. Système électronique (10) pour communication de portier vidéo et/ou pour domotique selon la revendication 6, **caractérisé en ce que** lesdites stations internes (11-14) comprennent une interface pour visualiser des signaux vidéo (23) et lesdites stations externes (15-16) comprennent une interface pour acquérir des signaux vidéo (24).

8. Système électronique (10 ; 10') pour communication de portier vidéo et/ou pour domotique selon la revendication 6 ou 7, **caractérisé en ce que** lesdites stations externes (15-16) sont connectées chacune à une serrure électrique (17).

9. Système électronique (10') pour communication de portier vidéo et/ou pour domotique selon l'une quelconque des revendications précédentes, **caractérisé en ce que** lesdits dispositifs électroniques (11-16 ; 11'-16') comprennent une pluralité d'interfaces de commande capables de commander un actuateur électrique ou électronique connecté à celles-ci.

10. Système électronique (10) pour communication de portier vidéo et/ou pour domotique selon l'une quelconque des revendications 6 à 9, **caractérisé en ce que** lesdites stations internes (11-14) et/ou lesdites stations externes (15-16) comprennent au moins un connecteur (18) adapté pour connecter au moins un capteur ou un actuateur pour des fonctions de domotique.

11. Système électronique (10) pour communication de portier vidéo et/ou pour domotique selon l'une quelconque des revendications 2 à 10, **caractérisé en ce que** ladite pluralité d'étages (31, 32, 33, 41) adaptés pour traiter des signaux différentiels comprend au moins un étage de transmission d'un signal vidéo différentiel (41) ou un étage de réception d'un signal vidéo différentiel (31).

12. Système électronique (10) pour communication de portier vidéo et/ou pour domotique selon l'une quelconque des revendications 6 à 11, **caractérisé en ce que** ladite pluralité d'étages (31, 32, 33, 41) adaptés pour traiter des signaux différentiels comprend au moins un étage de transmission d'un signal audio différentiel (32) et un étage de réception d'un signal audio différentiel (33), ledit étage de transmission d'un signal audio différentiel (32) comprenant un générateur de courant commandé en tension (35) commandé par la tension en sortie dudit microphone (22).

13. Système électronique (10) pour communication de portier vidéo et/ou pour domotique selon l'une quelconque des revendications précédentes, **caractérisé en ce que** lesdits étages pour transmettre (32) et recevoir (33) un signal audio différentiel sont connectés par ledit bus de communication multifilaire (19) auxdits moyens d'alimentation électrique (20), et **en ce que** deux impédances (Za) ayant la même valeur, positionnées une vers le pôle positif et l'autre vers le pôle négatif, sont prédisposées en sortie desdits moyens d'alimentation électrique (20), au niveau des conducteurs (36) dudit bus de communication multifilaire (19) destinés à la transmission et la réception du signal audio analogique différentiel.

14. Système électronique (10) pour communication de portier vidéo et/ou pour domotique selon l'une quelconque des revendications 2 à 13, **caractérisé en ce que** lesdits moyens (30, 40) pour le traitement de signaux et l'échange de données comprennent un étage de commande (42) comprenant un microcontrôleur (43) interfacé avec ledit bus multifilaire (19) par un circuit comparateur (45).

15. Système électronique (10) pour communication de portier vidéo et/ou pour domotique selon la revendication 14, **caractérisé en ce que** ledit étage de commande (42) comprend une impédance (Zr) en entrée, ledit étage de commande (42) étant connecté par ledit bus de communication multifilaire (19) auxdits moyens d'alimentation électrique (20), et **en ce qu'**une impédance (Zd) est connectée en sortie desdits moyens d'alimentation électrique (20), au niveau des conducteurs (44) dudit bus de communication multifilaire (19) destinés à la transmission et la réception desdits signaux de commande numériques et desdites données numériques.

16. Système électronique (10) pour communication de portier vidéo et/ou pour domotique selon l'une quelconque des revendications précédentes, **caractérisé en ce qu'**une résistance est connectée en parallèle à une inductance en sortie desdits moyens d'alimentation électrique (20) - au niveau des conducteurs dudit bus de communication multifilaire (19) destinés à la transmission et la réception desdits signaux de commande numériques et desdites données numériques.

17. Système électronique (10) pour communication de portier vidéo et/ou pour domotique selon l'une quelconque des revendications précédentes, **caractérisé en ce que** deux résistances de la même valeur, disposées une vers le pôle positif et l'autre vers le pôle négatif, sont prédisposées en sortie desdits moyens d'alimentation électrique (20) - au niveau des conducteurs dudit bus de communication multifilaire (19) destinés à la transmission et la réception du signal audio analogique.
